# EUROPEAN PATENT SPECIFICATION

(11) **EP 2 247 838 B1**
(45) Date of publication and mention of the grant of the patent: **04.03.2015**
(21) Application number: 09700181.2
(22) Date of filing: 07.01.2009
(51) Int. Cl.: F02B 37/10, F02B 39/00, F02B 39/16, F02C 6/12, F01D 15/10, F02B 33/40, F02B 37/013, F02B 37/04, F02B 39/10

(54) **SUPERCHARGER ARRANGEMENT FOR A PISTON ENGINE**
AUFLADEANORDNUNG FÜR EINEN KOLBENMOTOR
GROUPE DE SURALIMENTATION POUR UN MOTEUR A PISTON

(30) Priority: 10.01.2008 FI 20085016
(43) Date of publication of application: 10.11.2010
(73) Proprietor: Wärtsilä Finland Oy, 65380 Vaasa (FI)
(72) Inventor: ARKKIO, Antero, FI-02130 Espoo (FI); LARJOLA, Jaakko, FI-52700 Mäntyharju (FI)
(74) Representative: Ansala, Jyrki Matti
(86) International application number: PCT/FI2009/050009
(87) International publication number: WO 2009/087274

(56) References cited:
- WO-A2-98/30790
- US-A- 5 605 045
- US-A1- 2002 040 581
- US-B1- 6 305 169

## Description

The invention relates to a supercharger arrangement for a piston engine in accordance with the preamble of claim 1.

To supercharge a piston engine is, as such, known from prior art and it offers many advantages. Especially exhaust gas charging, i.e. turbocharging, is as such a very advantageous way to execute supercharging, since it utilises the energy contained in exhaust gas, which would otherwise possibly go wasted. In a turbocharger, a turbine section adapted in the exhaust gas flow of the engine is arranged to drive the compressor section adapted in the feed air flow to the engine. The turbine section and the compressor section are typically adapted at the ends of a common shaft, which shaft is axially and radially mounted in bearings on the body of the turbocharger.

High demands are imposed on the bearing system in a turbocharger. The rotor of the supercharger rotates in operation several tens of thousands of revolutions per minute and the bearings are exposed to high temperatures. The exhaust gas flow transmits axial forces to the shaft via the turbine wheel of the turbine section, which forces need to be compensated by axial bearings. On the other hand, the radial clearances between the turbine wheel and the compressor impeller and their respective housings are very small, thereby imposing high demands on radial bearings.

The publication US 2005/0198956 A1 discloses a bearing system for a turbocharger realised with magnetic bearings, in which system the radial bearings are embodied as passive permanent magnets and the axial bearings as active magnetic bearings. The axial position of the shaft is determined by means of a sensor, the signal of which guides the electromagnet of the active bearing and thus the axial excursions will be compensated.

Due to the operating principle of a turbocharger, in such running conditions of the engine, in which the temperature and mass flow rate of exhaust gas is low, e.g. with low loads and operating speeds, it is often impossible to produce a desired boost pressure for the feed air system of the engine by the compressor of the turbocharger. On the other hand, the operation of the turbocharger is also affected by its mass. The operation of the turbocharger in the transient situations of the engine load is not always able to follow the engine load changes at sufficient speed, but the response of the turbocharger has a certain delay, which also retards the reactivity of the engine accordingly.

There have been suggestions to solve the above-mentioned problems related to the operation of turbochargers for instance by connecting a separate electrically powered additional compressor in series with the compressor of the turbocharger as well as by means of an auxiliary electric motor to be coupled to the shaft of the turbocharger.

The publication US 6,390,789 B1 discloses an electric motor driven turbocompressor apparatus, in which the electric motor and its bearings are cooled by a gas flow, which is led from the pressure side of the compressor stage to the electric motor and then again back to the suction side of the compressor stage. The cooling provided by this arrangement is insufficient.

The publication DE 10 2005 056797 A1 discloses a two-stage turbocharger arrangement, which comprises both a two-stage compressor and a turbine. Both turbine-compressor pairs are coupled to their respective shafts and the shafts are arranged within each other. The turbines are arranged at one end of the nested shafts and the compressors at the other end. A solution of this kind is relatively complicated especially in terms of the bearing system of two separate turbine-compressor pairs.

The publication also shows that a combined motor-generator can be adapted in conjunction with shafts either to bring energy to the shaft or to take energy from the shaft. To use an electric machine in conjunction with a turbocharger is challenging, since it has to be possible to keep the temperature of the electric machine within suitable limits. DE 10 2005 056 797 A1 does not provide any solution for controlling the temperature of the electric machine.

EP1182346 A2 shows an exhaust gas turbocharger for an internal combustion engine in which an electric motor is incorporated in to the turbocharger so that the rotor of the electric motor is integrated into the compressor wheel i.e. the compressor wheel includes parts necessary for operating as a rotor of and electric motor. The stator parts are respectively included in the compressor housing.

In US 5605045A there is shown an exhaust gas-driven turbine which drives a compressor to charge and internal combustion engine. An electric motor is located on the connecting shaft to add power to the turbo charging shaft. Cooling for the motor includes circulation of engine oil therearound.

WO 98/30790 A2 describes a motor driven centrifugal air compressor in which the electric motor is arranged to an annular space in the air inlet of the compressor. There are openings located in the motor casing so that a part of the air may flow through the engine adjacent the motor windings and magnet. However, the document fails to disclose a flow channel between the stator and rotor part i.e. between the windings and the magnet.

A purpose of the invention is to provide a supercharger arrangement for a piston engine comprising a compressor section and an electric machine coupled to a same shaft, in which the electric machine is provided with at least one gas flow channel, and the suction conduit of the compressor section is arranged in flow connection with the gas flow channel of the electric machine, in which a stator part and/or a body part of the electric machine is provided with gas flow channels so that suction air for the compressor section is arranged to pass through said at least one gas flow channel of the electric machine in order to provide cooling of the electric machine, which provides better overall operation of the engine in different operating conditions.

The supercharger arrangement according to the invention is mainly characterised in that an air gap between the rotor and the stator part of the electric machine is arranged to operate as the gas flow channel of the electric machine in addition to the gas flow channels in the stator part and/or a body part.

The cooling of the electric machine is provided in this manner and it is possible to transmit even a high power therethrough either to the compressor section or to be used as electric power from the turbine section.

Preferably all the suction air of the compressor section is arranged to pass through said at least one gas flow channel of the electric machine, whereby the arrangement is reliable in operation and sufficient cooling of the electric machine is ensured in all operating conditions.

According to a preferred embodiment, the compressor section comprises at least a first and a second compressor stage, whereby the suction conduit of the first compressor stage of the compressor section is arranged in flow connection with the gas flow channel of the electric machine so that suction air for the first compressor stage of the compressor section is arranged to pass through the gas flow channel of the electric machine. Therefore, when the compressor section has two stages, the suction air of the engine flowing through the electric machine has a suitable temperature for the cooling.

According to one embodiment of the invention, the gas flow channels of the electric machine comprise an air gap between the rotor and the stator part of the electric machine as well as gas flow channels for the stator part and/or its body part arranged in the stator part. Preferably, the cross-sectional flow area of the gas flow channels of the stator part and/or its body part arranged in the stator part is over 90 % of the total cross-sectional area of the gas flow channels of the electric machine. More specifically the cross-section of the gas flow channels of the stator part is 95 - 98 % of the total cross-sectional area of the gas flow channels of the electric machine. This ensures a sufficiently small gas pressure loss in the electric machine and also sufficient cooling of the rotor.

According to an embodiment, the supercharger arrangement comprises a turbine section arranged on its shaft and is thus a turbocharger.

The shaft in the arrangement comprises preferably at least one axial flow channel, which extends from the compressor section to the second bearings of the shaft, for conveying the gas pressurised by the compressor section to a bearing in order to cool it.

The supercharger arrangement has preferably two stages and an intercooler for gas is arranged after the first stage. Then, said flow channel of the shaft extends from the suction side of the second compressor stage of the compressor section to the bearings at the second end of the shaft, whereby the temperature of the gas is sufficiently low.

According to one embodiment of the invention the axial bearings of the shaft of the supercharger arrangement are supported on the body part of the electric machine, whereby they are efficiently cooled and easily accessible.

According a another embodiment of the invention a turbocharger comprising a turbine section and compressor section coupled to a same shaft, in which turbocharger the shaft comprises preferably at least one axial flow channel, which extends from the compressor section to the turbine section, for conveying the gas pressurised by the compressor section to a turbine section bearing of the shaft in order to cool it. The axial flow channel is arranged to be in flow connection with pressure side of the compressor section and to extend over the turbine section bearing.

According to a still another embodiment of the invention a shaft for turbocharger comprises coupling for compressor wheel and turbine wheel and further coupling for at least turbine side bearing. The shaft is further provided with at least one axial flow channel, which extends from turbine side bearing towards the compressor wheel coupling, for providing conveyance of the gas pressurised by the compressor section to a turbine section bearing of the shaft in order to cool it, when in use. Additionally according to an embodiment of the invention the axial flow channel is conveying a cooling medium during fitting of the compressor wheel by means of shrinkage fit to the shaft.

Additional characteristic features of the invention are disclosed in the appended claims.

Several advantages are achieved by the turbocharger arrangement according to the present invention. By the arrangement it is possible, e.g., to improve the load-carrying capacity of the engine, its operation with partial loads/at a low rotary speed, as well as its efficiency. By means of the invention also emissions can be reduced significantly.

In the following, the invention and its operation will be explained with reference to the appended schematic drawings, of which
Figure 1 shows a supercharger arrangement according to an embodiment of the invention,
Figure 2 shows a turbocharger arrangement according to another embodiment of the invention connected to a combustion engine,
Figure 3 shows a turbocharger arrangement according to another embodiment of the invention,
Figure 4 depicts the cross-section III-III of Figure 3; and
Figure 5 shows the principle for compensating the axial forces of the turbocharger arrangement.

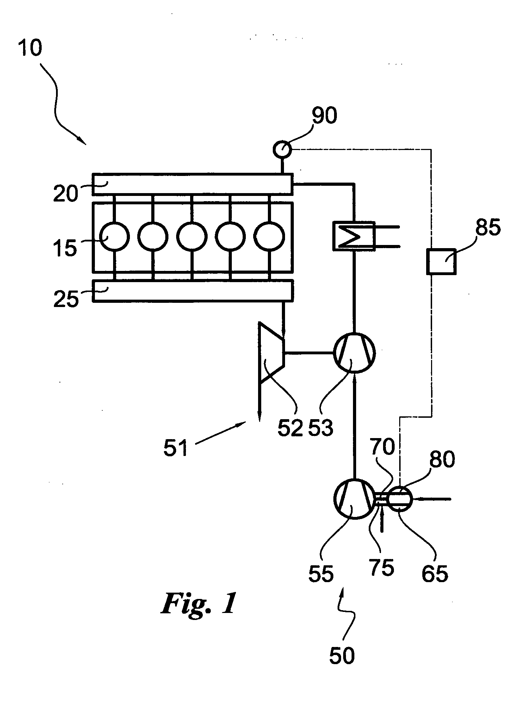

Fig. 1 shows a turbocharged piston engine 10. The engine comprises a plurality of cylinders 15, which are for instance in the case of a four-stroke engine in flow connection, controlled by valves (not shown), with combustion gas and exhaust gas collectors 20, 25. The combustion gas, i.e. the gas participating in the combustion, is typically air, but in any case gas that contains oxygen. The engine comprises a turbocharger arrangement 51 that includes a compressor section 52 and a turbine section 53. A second compressor section 55 is coupled in series with the compressor section 52 of the turbocharger arrangement 51, with which second compressor section an electric machine 65 is coupled to a same shaft 70. The compressor section 55 and the electric machine 65 are integrated in such a way that the suction conduit 75 of the compressor section is arranged in flow connection with the cooling channels 80 of the electric machine 65 and that the suction air for the compressor section 55 is arranged to pass through the channels 80 of the electric machine 65. In this manner, the gas used in the engine and participating in the combustion, typically combustion air, is led first via the channels 80 of the electric machine, and from there further to the compressor section 55, where the pressure of the combustion gas is raised. A part of the combustion gases can be led past the electric machine directly to the suction conduit 75 of the compressor section.

The arrangement comprises preferably a pressure gauge 90 for measuring the pressure produced by the compressor section 55. In this case, the turbocharger arrangement is preferably run so that the operation of the electric machine 65 is controlled on the basis of pressure measuring in such a way that energy is either brought to the electric machine or energy is taken from the electric machine so as to maintain the pressure produced by the turbocharger arrangement within the range of predetermined minimum and maximum pressures.

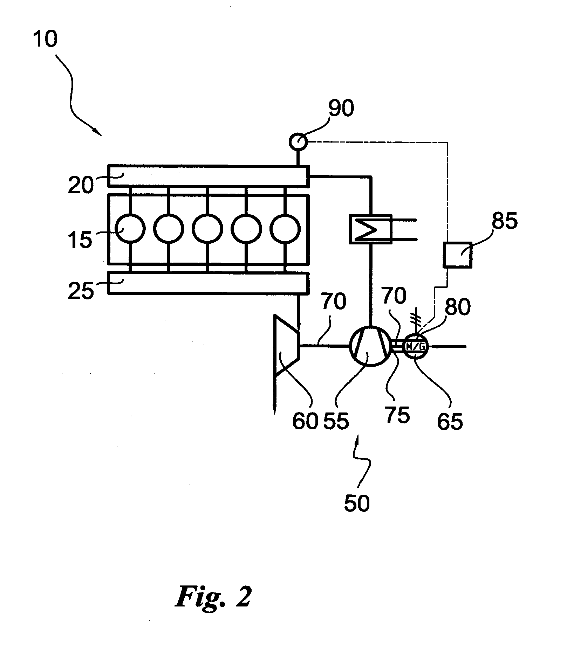

Figure 2 shows a turbocharged piston engine 10, which corresponds to the engine shown in Figure 1 with the exception that its supercharger arrangement is realised in a different way. Here, the engine comprises a turbocharger arrangement 50 including a compressor section 55, a turbine section 60 and an electric machine 65, all coupled to a same shaft 70. The shaft may be built-up in pieces or it may consist of one piece. While the engine is running, exhaust gas flows from the cylinders through an exhaust gas collector to the turbine section 60 of the turbocharger arrangement 50, in which the exhaust gas perform work. This work is utilised, according to the invention, by the compressor section 55 and/or by the electric machine 65. The compressor section 55 and the electric machine 65 are also integrated in such a way that the suction conduit 75 of the compressor section is arranged in flow connection with the cooling channels 80 of the electric machine 65 and that the suction air of the compressor section 55 is arranged to pass through the channels 80 of the electric machine 65. In this manner, the gas participating in the combustion of the engine, typically combustion air, is led first via the channels 80 of the electric machine, and from there further to the compressor section 55, where the pressure of the combustion gas is raised.

By the supercharger arrangement 50 according to the invention, one embodiment of which is shown in Figure 2, significant advantages are achieved in various operational situations of the engine 10. The electric machine runs both as a generator and a motor, depending on the power balance of the turbocharger arrangement. In such running situations, where the amount of exhaust gases is rather small, the electric machine 65 may be used so as to perform work for the compressor section 55 and thus maintain a higher boost pressure than it would be possible in this situation by the power received from the turbine section. Then, the electric machine acts as an electric motor assisting the rotation of the compressor section.

In such situations, where the amount of exhaust gas from the engine and the energy it contains is larger than the compressor section is able to utilise or is required for supercharging combustion air, the electric machine 65 may be used for retarding the turbine (and simultaneously also the compressor, since these are located on the same shaft) and at the same time for producing electric energy. In this case, the electric machine acts as a generator. This makes it possible that all the exhaust gases of the engine, i.e. the entire exhaust gas flow, can always be led through the turbine section 60, and accordingly, the arrangement does not require a wastegate or other equipment, such as adjustable inlet vanes, for restricting the power of the turbine. In this manner, the arrangement according to the invention enables the dimensioning of the turbine section very efficiently without any risk that the boost pressure or the rotary speed of the supercharger arrangement would rise excessively, as the rotary speed of the assembly can be regulated by adjusting the retardation effect of the electric machine.

The arrangement also comprises a control unit 85, which may be either a unit dedicated to the turbocharger arrangement or a part of a centralised control system of the engine. The control unit is arranged to control at least the operation of the electric machine 65.

Invention relates according an embodiment of the invention also to a method of running a turbocharged engine with high loads (more than 60 % of maximum capacity) in a turbocharger arrangement 50, which includes a compressor section 55, a turbine section 60 and an electric machine 65 coupled to a same shaft 70, in which method substantially the whole exhaust gas flow of the engine is led to the turbine section of the turbocharger arrangement, where the energy in the exhaust gas is converted to mechanical work, which is utilised for running the compressor section of the turbocharger arrangement and for producing electricity by the electric machine. Further in the method, the combustion air of the engine is heated by transferring heat from the electric machine 65 to the combustion air before the combustion air is conveyed to the compressor section 55.

According to one embodiment the turbocharger arrangement comprises also a measuring device 127 for measuring the rotational speed of the shaft. In this case, the turbocharger arrangement is preferably run so that the operation of the electric machine is controlled on the basis of the measurement of rotational speed in such a way that that energy is either brought to the electric machine or energy is taken from the electric machine so as to maintain the rotational speed of the turbocharger arrangement within the range of predetermined minimum and maximum rotational speeds.

According to one embodiment, the turbocharger arrangement comprises also a pressure gauge 90 for the pressure produced by the compressor section 55. In this case, the turbocharger arrangement is preferably run so that the operation of the electric machine 65 is controlled on the basis of pressure measuring in such a way that energy is either brought to the electric machine or energy is taken from the electric machine so as to maintain the pressure produced by the turbocharger arrangement within the range of predetermined minimum and maximum pressures.

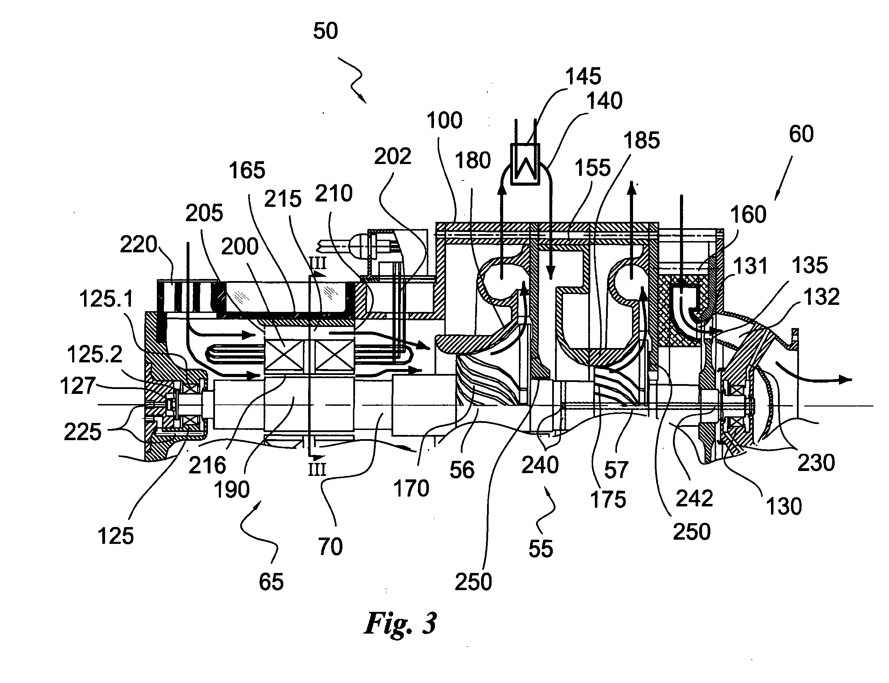

Fig. 3 shows in more detail an embodiment of the turbocharger arrangement 50 according to the invention, which can be connected in conjunction with a combustion engine by using the principle shown in Figure 2. In this way, a very compact assembly is provided, by which the operation of the engine can be improved. The turbocharger arrangement operates very flexibly according to the need determined by the operating conditions of the engine, which makes it advantageous e.g. to need to oversize the turbocharger for lower rotational speed ranges of the engine, which was earlier considered a problem. The turbocharger arrangement 50 shown in Figure 3 comprises a body 100, which includes a body part 165 of the electric machine, a body part 155 of the compressor section and a body part 160 of the turbine section, all connected to each other, and in which the body part 155 of the compressor section is adapted between the respective body parts of the electric machine and the turbine section.

The turbine section is here an axial turbine and it comprises a turbine wheel 135 and a set of inlet vanes 131 preceding it in the flow direction of gas. On the trailing side of the turbine section in the embodiment according to Figure 3, there is arranged a diffuser 132, to the flange of which the flue gas channel of the engine can be attached. The flow of gas in the turbine section is illustrated by arrows.

The compressor section comprises a radial compressor of two stages, i.e. a first stage 56 and a second stage 57, connected to one another so that there is a flow channel 140 arranged from the pressure side of the first stage to the suction side of the second stage. The flow channel 140 is provided with an intercooler 145, by means of which the combustion air flowing from the first stage to the second stage can be cooled before it is fed to the second stage 57. Both compressor stages comprise a compressor impeller 170, 175, respectively, adapted on a common shaft 70 and inside compressor enclosures 180, 185 of the first and second stage, respectively, arranged in the body. The flow of gas in the compressor section is illustrated by arrows.

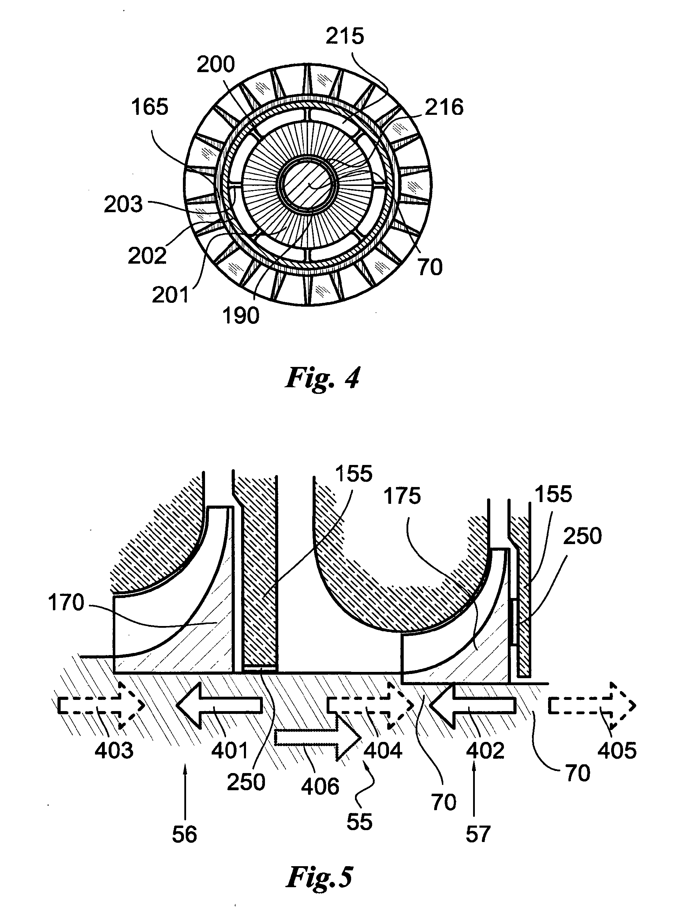

With reference to Figures 3 and 4, the electric machine 65 of the turbocharger arrangement 50 comprises a permanent magnet rotor 190 arranged in conjunction with the shaft 70 and a stator part 200 surrounding it. The stator part is supported on the body part 165 of the electric machine and it comprises an electric connection 202 for transferring electric energy to the electric machine or from the electric machine to the network. The stator part 200 comprises gas flow channels 215 extending from the first end 205 to the second end 210 in its axial direction, which channels also act as coolant channels for the electric machine. In this embodiment, the first gas flow channels 215 of the stator part are arranged radially outside the coil section 201 of the stator part to form an essentially annular flow channel, whereby the coil section 201 of the stator part 200 of the electric machine is arranged radially inside the stator part and/or the flow channels 215 of its body part.

The stator part is supported on the outer section 202 of the stator part by means of radially extending support parts 203. An air gap 216 arranged between the stator and the rotor acts as a second gas flow channel. The flow channels form at the same time both coolant channels for the electric machine 65 and suction channels for the compressor section. Preferably, essentially all, or at least most of, the suction air of the compressor section is arranged to pass through the gas flow channels 215, 216 of the electric machine. In this way, the amount of the gas flow, which in practise consists of the combustion air of the engine, is always sufficient for cooling the electric machine and on the other hand, in a correct temperature for the cooling. The gas flow channels 215 of the stator part and/or its body part in the electric machine 65 are dimensioned in regard to the air gap between the rotor and stator part of the electric machine so that an exactly sufficient amount of air for the cooling passes through said air gap, whereby the pressure loss in the cooling can be minimised.

The cross-sectional flow area of the gas flow channels 215 of the stator part and/or its body part arranged in the stator part 200 is over 90 % of the total cross-sectional area of the flow channels of the electric machine 65, and the cross-sectional flow area of the air gap 216 between the stator part 200 and the rotor 190 is less than 10 % of the total cross-sectional area of the flow channels of the electric machine 65. Thus, less than 10 % of the total gas flow is arranged to flow through the air gap 216 between the stator part 200 and the rotor 190. The cross-section of the gas flow channels of the stator part is determined on the basis of this. It is preferably 95 - 98 % of the total cross-sectional area of the gas flow channels of the electric machine 65, whereby a gas flow may always pass through the air gap 216 between the stator part 200 and the rotor 190, while the machine is running. This ensures the cooling of the rotor 190 so that the air gap, however, does not cause any excessive losses in the magnetic operation of the electric machine. The flow of gas in the electric machine is illustrated by arrows.

The shaft 70 of the turbocharger arrangement is rotatably supported on the body by means of bearings 125 arranged at the first end of the shaft and bearings 130 arranged at the second end thereof. The shaft 70 may be an essentially rigid shaft built-up in pieces, or it may be made of a one-piece shaft. The bearings 125 at the first end are supported on the body part 165 of the electric machine 65 and the bearings 130 at the second end on the body part 160 of the turbine section. The body part 165 of the electric machine comprises openings 220 arranged in the shell of the body part or at the end thereof for enabling the flow of the suction air of the compressor section to the side of the first end 205 of the stator part of the electric machine. In this embodiment the openings open radially, but also another kind of solution is possible. In the embodiment according to Figure 3, the bearings at the first end comprise both a radial bearing system 125.1 and an axial bearing system 125.2. An inlet and outlet 225 for lubrication oil is arranged for these systems. The housing construction of the bearings at the first end is restricted by the gas flow space facing the first end 205 of the stator part, whereby the suction air of the compressor section also acts as a medium for cooling the housing construction of the bearings at the first end. In practise, the radial bearing system is preferably a slide bearing system.

The bearings 130 at the second end (referring to the end facing the turbine section) of the shaft 70 comprise in this embodiment only a radial bearing system. The bearings 130 at the second end comprise a bearing housing, which is adapted in this embodiment in the body part 160 of the turbine section 60, but the position of the bearings at the second end of the shaft may in some applications be also inside the turbine section 60, whereby the impact of the exhaust gases on the temperature of the bearing is smaller than in the situation shown in the figure. An inlet and outlet 230 for lubrication oil is arranged for the bearings in conjunction with the body part. The temperature of the turbine section is relatively high due to the hot exhaust gases flowing therethrough, whereby cooling is arranged in conjunction with the bearings at the second end of the shaft. The cooling arrangement comprises at least one axial channel 242, which extends from the end of the shaft 70 past the bearings at the second end, and at one end of which channel there is at least one radial channel 240 extending from the surface of the shaft 70 to the axial channel 242. The axial channel 242 extends preferably to the suction side of the second turbine stage 57, to a point after the intercooler 145 in the gas flow. In this embodiment, the radial channels 240 are arranged on the shaft 70 in the area between the compressor impellers 170, 175 of the first 56 and second 57 compressor stage, respectively. In operation, after the first compressor stage 56, gas (air) already at raised pressure and cooled by the intercooler flows along the channels 240, 242 past the bearings 130 at the second end of the shaft, inside the shaft, keeping the temperature of the bearing suitably low. From the channel 242 the gas is discharged into the diffuser of the turbine section and from there, into the exhaust gas channel through the clearances of the turbine wheel 135.

The channels 240, 242 can be utilised also in conjunction with the detachment of the turbine wheel and the compressor impeller of the second compressor stage by leading fluid at low temperature into the shaft 70 through the channel in order to lower the temperature of the shaft and to reduce its diameter, while the shrink fit between the shaft and the turbine wheel or the compressor impeller of the second compressor stage is disassembled by heating said turbine wheel or compressor impeller.

In order to decrease the loads on the thrust bearings, i.e. the axial bearings, the axial forces generated by the compressor impellers and the turbine in a normal operational situation are according to an embodiment of the invention compensated or at least minimised. The principle of arranging sealings is shown in Figure 5. This is provided by the shaft sealings of the compressor impellers 170, 175 in the two-stage compressor section 55 as follows. Sealings 250 are arranged in a certain way behind the compressor impellers, i.e. in a radial compressor on the opposite side of the impeller with respect to the blades. The sealings consist of labyrinth seals. In figure 5, the arrows 401, 402 with unbroken lines illustrate the forces pushing the thrust bearing and the arrows 403, 404, 405 with dashed lines the forces pulling the thrust bearing. The forces 401, 402, 403 and 404 are generated by the compressor section and the force 405 by the turbine section. The arrow 406 with a dash-dotted line illustrates the load imposed on the thrust bearing in a normal operational situation. The total force impact of the compressor stages is according to and embodiment of the invention adjusted so that it corresponds with a precision of +/-10 % the axial force 405 exerted on the shaft 70 by the turbine section 60, whereby in a normal operational situation the load imposed on the thrust bearing is about +/-10 % of the axial force exerted on the shaft by the turbine. Accordingly, the axial forces in normal situations are relatively small, which results in the load on the thrust bearing being relatively small as well, and thereby its lifetime being long. Almost a balance situation of this kind is achieved so that the sealing 250 of the second compressor stage is arranged between the shaft 70 and the body part 155 and between the second compressor impeller 175 and the body part 155. This provides behind the compressor impellers such surface areas with respect to the pressures and/or forces prevailing there and exerted on other components of the turbocharger arrangement that said force balance can be achieved.

It is to be noted that only a few most advantageous embodiments of the invention are described in the above. Thus, it is clear that the invention is not limited to the above-described embodiments, but may be applied in many ways in conjunction with different piston engines within the frame of the appended claims. The invention may be applied both to four-stroke and two-stroke engines, which are driven by liquid and/or gaseous fuel. The features described in conjunction with the different embodiments may be used in conjunction with other embodiments as well and/or various combinations of the described features may be made within the frame of the basic idea of the invention, if so desired and if technical feasibility for this exists.

## Claims

1. A supercharger arrangement (50) for a piston engine comprising a compressor section (55) and an electric machine (65) coupled to a same shaft (70), in which the electric machine is provided with at least one gas flow channel (215, 216), and the suction conduit of the compressor section is arranged in flow connection with the gas flow channel (215, 216) of the electric machine (65), in which a stator part (200) and/or a body part of the electric machine (65) is provided with gas flow channels (215) so that suction air for the compressor section is arranged to pass through said at least one gas flow channel of the electric machine in order to provide cooling of the electric machine (65), **characterised in that** an air gap (216) between the rotor and the stator part of the electric machine is arranged to operate as the gas flow channel of the electric machine (65) in addition to the gas flow channels (215) in the stator part (200) and/or a body part.

2. A supercharger arrangement according to claim 1, **characterised in that** main part of the suction air of the compressor section (55) is arranged to pass through said at least one gas flow channel (215, 216) of the electric machine.

3. A supercharger arrangement according to claim 1, **characterised in that** the compressor section (55) comprises at least a first (56) and a second (57) compressor stage, and that the suction conduit of the first compressor stage (56) of the compressor section is arranged in flow connection with the gas flow channel (215, 216) of the electric machine so that suction air for the first compressor stage of the compressor section is arranged to pass through the gas flow channel of the electric machine (65).

4. A supercharger arrangement according to claim 3, **characterised in that** essentially all the gas passing through the first compressor stage (56) is guided to pass over to the second compressor stage (57).

5. A supercharger arrangement according to claim 1, **characterised in that** the gas flow channels (215) of the stator part and/or its body part of the electric machine (65) are dimensioned in regard to the air gap (216) between the rotor and the stator part of the electric machine so that an exactly sufficient amount of air for cooling passes through said air gap, whereby the pressure loss in the cooling can be minimised.

6. A supercharger arrangement according to claim 1, **characterised in that** the coil section (201) of the stator part (200) of the electric machine is arranged radially inside the gas flow channels (215) of the stator part and/or its body part.

7. A supercharger arrangement according to claim 1, **characterised in that** the cross-sectional flow area of the gas flow channels (215) of the stator part and/or its body part arranged in the stator part (200) is over 90 % of the total cross-sectional area of gas flow channels of the electric machine (65).

8. A supercharger arrangement according to claim 1, **characterised in that** cross-section of the gas flow channels of the stator part is 95 - 98 % of the total cross-sectional area of the gas flow channels of the electric machine (65).

9. A supercharger arrangement according to claim 1, **characterised in that** the shaft (70) comprises at least one axial flow channel (242), which extends from the compressor section to the second bearings of the shaft (70), for conveying the gas pressurised by the compressor section to a bearing (130) in order to cool it.

10. A supercharger arrangement according to claim 9, **characterised in that** the supercharger arrangement is a turbocharger arrangement comprising a turbine section (60) and that the bearings (130) at the second end are at the shaft end facing the turbine section (60).

11. A supercharger arrangement according to claim 9, **characterised in that** the compressor section has two stages, and that the flow channels (240, 242) extend from the suction side of the second compressor stage (57) of the compressor section (55) to the bearings at the second end of the shaft (70).

12. A supercharger arrangement according to claim 9, **characterised in that** the radial bearings (125.1, 130) of the shaft (70) are supported at the first end by the body part (165) of the electric machine (65) and at the second end by the body part (160) of the turbine section (60).

13. A supercharger arrangement according to claim 10, **characterised in that** the axial bearings (125.2) are supported by the body part (165) of the electric machine.

14. A supercharger arrangement according to claim 10, **characterised in that** the axial bearings (125.2) are arranged in the turbine section and supported by the body part of the turbine.

15. A supercharger arrangement according to anyone of the preceding claims, **characterised in that** the supercharger arrangement is a turbocharger arrangement comprising a turbine section (60), and that the compressor section (55), turbine section (60) and electric machine (65) are arranged on the shaft (70) so that the compressor section is adapted axially between the electric machine and the turbine section.

## Patentansprüche

1. Turboladeranordnung (50) für einen Kolbenmotor, umfassend einen Kompressorabschnitt (55) und eine elektrische Maschine (65), gekoppelt auf derselben Welle (70), wobei die elektrische Maschine mit wenigstens einem Gasströmungskanal (215, 216) vorgesehen ist und der Saugkanal für den Kompressorabschnitt in Strömungsverbindung mit dem Gasströmungskanal (215, 216) der elektrischen Maschine (65) angeordnet ist, wobei ein Statorteil (200) und/oder ein Körperteil der elektrischen Maschine (65) mit Gasströmungskanalen (215) vorgesehen ist, so dass Ansaugluft für den Kompressorabschnitt so angeordnet ist, um durch den wenigstens einen Gasströmungskanal der elektrischen Maschine hindurchzugehen, um Kühlung der elektrischen Maschine (65) bereitzustellen, **dadurch gekennzeichnet, dass** ein Luftspalt (216) zwischen dem Rotor- und dem Statorteil der elektrischen Maschine angeordnet ist, um als Gasströmungskanal der elektrischen Maschine (65) zusätzlich zu dem Gasströmungskanal (215) im Statorteil (200) und/oder einem Körperteil zu dienen.

2. Turboladeranordnung nach Anspruch 1, **dadurch gekennzeichnet, dass** der Hauptteil der Ansaugluft des Kompressorabschnitts (55) angeordnet ist, um durch den wenigstens einen Gasströmungskanal (215, 216) der elektrischen Maschine hindurchzugehen.

3. Turboladeranordnung nach Anspruch 1, **dadurch gekennzeichnet, dass** der Kompressorabschnitt (55) wenigstens eine erste (56) und eine zweite (57) Kompressorstufe umfasst und dass der Ansaugkanal der ersten Kompressorstufe (56) des Kompressorabschnitts in Strömungsverbindung mit dem Gasströmungskanal (215, 216) der elektrischen Maschine angeordnet ist, so dass Ansaugluft für die erste Kompressorstufe des Kompressorabschnitts angeordnet ist, um durch den Gasströmungskanal der elektrischen Maschine (65) hindurchzugehen.

4. Turboladeranordnung nach Anspruch 3, **dadurch gekennzeichnet, dass** im Wesentlichen das gesamte Gas, welches durch die erste Kompressorstufe (56) hindurchgeht, geführt wird, um über die zweite Kompressorstufe (57) zu strömen.

5. Turboladeranordnung nach Anspruch 1, **dadurch gekennzeichnet, dass** die Gasströmungskanäle (215) des Statorteils und/oder des Körperteils der elektrischen Maschine (65) in Bezug auf den Luftspalt (216) zwischen dem Rotor- und dem Statorteil der elektrischen Maschine dimensioniert sind, so dass eine genau ausreichende Menge an Luft zum Kühlen durch den Luftspalt hindurchgeht, wobei der Druckverlust in der Kühlung minimiert werden kann.

6. Turboladeranordnung nach Anspruch 1, **dadurch gekennzeichnet, dass** der Spulenabschnitt (201) des Statorteils (200) der elektrischen Maschine radial innerhalb der Gasströmungskanäle (215) des Statorteils und/oder ihres Körperteils angeordnet ist

7. Turboladeranordnung nach Anspruch 1, **dadurch gekennzeichnet, dass** die Querschnittsströmungsfläche der Gasströmungskanäle (215) des Statorteils und/oder ihres Körperteils, welcher im Statorteil (200) angeordnet ist, über 90% der Gesamtquerschnittsströmungsfläche der Gasströmungskanäle der elektrischen Maschine (65) beträgt.

8. Turboladeranordnung nach Anspruch 1, **dadurch gekennzeichnet, dass** der Querschnitt der Gasströmungskanäle des Statorteils 95-98% der Gesamtquerschnittsströmungsfläche der Gasströmungskanäle der elektrischen Maschine (65) beträgt.

9. Turboladeranordnung nach Anspruch 1, **dadurch gekennzeichnet, dass** die Welle (70) wenigstens einen axialen Strömungskanal (242) umfasst, welcher sich vom Kompressorabschnitt zum zweiten Lager der Welle (70) erstreckt, um Gas, welches durch den Kompressorteil mit Druck beaufschlagt wurde, zu einem Lager (130) zu befördern, um es zu kühlen.

10. Turboladeranordnung nach Anspruch 9, **dadurch gekennzeichnet, dass** die Turboladeranordnung eine Turboladeranordnung ist, welche einen Turbinenabschnitt (60) umfasst, und **dadurch gekennzeichnet, dass** die Lager (130) am zweiten Ende sich am Wellenende dem Turbinenabschnitt (60) zugewandt befinden.

11. Turboladeranordnung nach Anspruch 9, **dadurch gekennzeichnet, dass** der Kompressorabschnitt zwei Stufen aufweist, und **dadurch gekennzeichnet, dass** die Strömungskanäle (240, 242) sich von der Ansaugseite der zweiten Kompressorstufe (57) des Kompressorabschnitts (55) zu den Lagern am zweiten Ende der Welle (70) erstrecken.

12. Turboladeranordnung nach Anspruch 9, **dadurch gekennzeichnet, dass** die radialen Lager (125.1, 130) der Welle (70) am ersten Ende durch den Körperteil (165) der elektrischen Maschine (65) und am zweiten Ende durch den Körperteil (160) des Turbinenabschnitts (60) getragen werden.

13. Turboladeranordnung nach Anspruch 10, **dadurch gekennzeichnet, dass** die axialen Lager (125.2) durch den Körperteil (165) der elektrischen Maschine getragen werden.

14. Turboladeranordnung nach Anspruch 10, **dadurch gekennzeichnet, dass** die axialen Lager (125.2) im Turbinenabschnitt angeordnet sind und durch den Körperteil der Turbine getragen werden.

15. Turboladeranordnung nach jedem beliebigen der vorangehenden Ansprüche, **dadurch gekennzeichnet, dass** die Turboladeranordnung eine Turboladeranordnung ist, welche einen Turbinenabschnitt (60) umfasst und dass der Kompressorabschnitt (55), der Turbinenabschnitt (60) und die elektrische Maschine (65) auf der Welle (70) angeordnet sind, so dass der Kompressorabschnitt axial zwischen der elektrischen Maschine und dem Turbinenabschnitt angepasst ist.

## Revendications

1. Agencement de superchargeur (50) pour un moteur à piston comprenant une partie de compresseur (55) et une machine électrique (65) couplées à un même arbre (70), dans lequel la machine électrique est munie d'au moins un canal d'écoulement de gaz (215, 216), et le conduit d'aspiration de la partie de compresseur étant disposé en connexion d'écoulement avec le canal d'écoulement de gaz (215, 216) de la machine électrique (65), dans lequel un élément de stator (200) et/ou un élément de corps de la machine électrique (65) est muni de canaux d'écoulement de gaz (215) de manière à ce que de l'air d'aspiration pour la partie de compresseur soit destiné à passer à travers ledit au moins un canal d'écoulement de gaz de la machine électrique afin de fournir un refroidissement de la machine électrique (65), **caractérisé en ce qu'**un intervalle (216) entre le rotor et l'élément de stator de la machine électrique est disposé de manière à opérer en tant que canal d'écoulement de gaz de la machine électrique (65) en plus des canaux d'écoulement de gaz (215) dans l'élément de stator (200) et/ou un élément de corps.

2. Agencement de superchargeur selon la revendication 1, **caractérisé en ce qu'**une partie principale de l'air d'aspiration de la partie de compresseur (55) est destinée à passer à travers ledit au moins un canal d'écoulement de gaz (215, 216) de la machine électrique.

3. Agencement de superchargeur selon la revendication 1, **caractérisé en ce que** la partie de compresseur (55) comprend au moins un premier (56) et un deuxième (57) étage de compresseur, et **en ce que** le conduit d'aspiration du premier étage de compresseur (56) de la partie de compresseur est disposé en connexion d'écoulement avec le canal d'écoulement de gaz (215, 216) de la machine électrique de manière à ce que l'air d'aspiration pour le premier étage de compresseur de la partie de compresseur soit destiné à passer à travers le canal d'écoulement de gaz de la machine électrique (65).

4. Agencement de superchargeur selon la revendication 3, **caractérisé en ce que** sensiblement tout le gaz passant à travers le premier étage de compresseur (56) est guidé de manière à passer par le deuxième étage de compresseur (57).

5. Agencement de superchargeur selon la revendication 1, **caractérisé en ce que** les canaux d'écoulement de gaz (215) de l'élément de stator et/ou son élément de corps de la machine électrique (65) sont dimensionnés en fonction de l'intervalle (216) entre le rotor et l'élément de stator de la machine électrique de manière à ce qu'une quantité précisément suffisante d'air pour refroidir passe à travers ledit intervalle, moyennant quoi la perte de pression dans le refroidissement peut être minimisée.

6. Agencement de superchargeur selon la revendication 1, **caractérisé en ce que** la partie de bobine (201) de l'élément de stator (200) de la machine électrique est disposée radialement à l'intérieur des canaux d'écoulement de gaz (215) de l'élément de stator et/ou son élément de corps.

7. Agencement de superchargeur selon la revendication 1, **caractérisé en ce que** la section d'écoulement en coupe transversale des canaux d'écoulement de gaz (215) de l'élément de stator et/ou son élément de corps disposé dans l'élément de stator (200) est de plus de 90% de la section totale en coupe transversale des canaux d'écoulement de gaz de la machine électrique (65).

8. Agencement de superchargeur selon la revendication 1, **caractérisé en ce que** la coupe transversale des canaux d'écoulement de gaz de l'élément de stator est de 95-98% de la section en coupe transversale des canaux d'écoulement de gaz de la machine électrique (65).

9. Agencement de superchargeur selon la revendication 1, **caractérisé en ce que** l'arbre (70) comprend au moins un canal d'écoulement axial (242) qui s'étend depuis la partie de compresseur jusqu'aux deuxièmes paliers de l'arbre (70) afin de transporter le gaz sous pression grâce à la section de compresseur vers un palier (130) afin de le refroidir.

10. Agencement de superchargeur selon la revendication 9, **caractérisé en ce que** l'agencement de superchargeur est un agencement de turbochargeur comprenant une partie de turbine (60), et **en ce que** les paliers (130) à la deuxième extrémité sont à l'extrémité de l'arbre faisant face à la partie de turbine (60).

11. Agencement de superchargeur selon la revendication 9, **caractérisé en ce que** la partie de compresseur a deux étages, et **en ce que** les canaux d'écoulement (240, 242) s'étendent depuis le côté d'aspiration du deuxième étage de compresseur (57) de la partie de compresseur (55) jusqu'aux paliers à la deuxième extrémité de l'arbre (70).

12. Agencement de superchargeur selon la revendication 9, **caractérisé en ce que** les paliers radiaux (125.1, 130) de l'arbre (70) sont supportés à la première extrémité par l'élément de corps (165) de la machine électrique (65), et à la deuxième extrémité, par l'élément de corps (160) de la partie de turbine (60).

13. Agencement de superchargeur selon la revendication 10, **caractérisé en ce que** les paliers axiaux (125.2) sont supportés par l'élément de corps (165) de la machine électrique.

14. Agencement de superchargeur selon la revendication 10, **caractérisé en ce que** les paliers axiaux (125.2) sont disposés dans la partie de turbine et supportés par l'élément de corps de la turbine.

15. Agencement de superchargeur selon l'une quelconque des revendications précédentes, **caractérisé en ce que** l'agencement de superchargeur est un agencement de turbochargeur comprenant une partie de turbine (60), et **en ce que** la partie de compresseur (55), la partie de turbine (60) et la machine électrique (65) sont disposées sur l'arbre (70) de manière à ce que la partie de compresseur soit adaptée axialement entre la machine électrique et la partie de turbine.
